# EUROPÄISCHE PATENTSCHRIFT

(11) **EP 2 191 592 B1**
(45) Veröffentlichungstag und Bekanntmachung des Hinweises auf die Patenterteilung: **31.10.2018**
(21) Anmeldenummer: 08803531.6
(22) Anmeldetag: 02.09.2008
(51) Int. Cl.: H04B 10/114

(54) **DATENÜBERTRAGUNG MIT LEUCHTDIODEN-RAUMBELEUCHTUNGEN**
DATA TRANSMISSION WITH ROOM ILLUMINATIONS HAVING LIGHT EMITTING DIODES
TRANSMISSION DE DONNÉES AVEC DES ÉCLAIRAGE SPATIAUX À DIODES LUMINESCENTES

(30) Priorität: 11.09.2007 DE 102007043255
(43) Veröffentlichungstag der Anmeldung: 02.06.2010
(73) Patentinhaber: Siemens Aktiengesellschaft, 80333 München (DE)
(72) Erfinder: RANDEL, Sebastian, 81547 München (DE); ROHDE, Harald, 81673 München (DE); GAETE JAMETT, Oscar Cristobal, 81373 München (DE)
(86) Internationale Anmeldenummer: PCT/EP2008/061560
(87) Internationale Veröffentlichungsnummer: WO 2009/033984

(56) Entgegenhaltungen:
- EP-A- 1 564 914
- WO-A-02/25842
- US-A1- 2004 004 627
- US-A1- 2004 101 312
- US-A1- 2004 247 323

## Beschreibung

Die Erfindung betrifft ein Verfahren zur Aussendung von Daten mittels einer Mehrzahl von Leuchtdioden sowie eine zur Aussendung von Daten ausgestaltete Anordnung mit einer Mehrzahl von Leuchtdioden.

Leuchtdioden, auch bezeichnet als LEDs = Light Emitting Diodes, werden sowohl bezüglich ihrer Lichtausbeute und Energieeffizienz als auch bezüglich ihres Preises stetig weiterentwickelt. Es ist absehbar, dass sie eine weite Verbreitung auch zu Beleuchtungszwecken erfahren werden.

Im Gegensatz zu herkömmlichen Leuchtmitteln wie Glühbirnen und Leuchtstoffröhren lassen sich Leuchtdioden sehr schnell modulieren. Daher sind sie auch hervorragend zur Datenübertragung parallel zur Beleuchtung geeignet.

Es ist bekannt, eine Leuchtdiode, die der Raumbeleuchtung - also kurz gesagt als Lampe - dient, gleichzeitig zur Aussendung von analogen und/oder digitalen Daten mittels einer Modulation der Intensität der Leuchtdiode zu verwenden. Dabei ist es zweckmäßig, die Modulation so durchzuführen, dass sie für den Menschen nicht wahrnehmbar ist, um die Leuchtdiode in ihrer Funktion als Lampe nicht zu beeinträchtigen. Ein einfaches Beispiel für eine Modulation ist eine Hell-DunkelTastung mit einer Frequenz von mehreren Megahertz. Es können auch komplexere, aus der Funktechnik bekannte, Modulationen verwendet werden.

Für eine einzelne Leuchtdiode muss hierzu lediglich eine kleine elektrische Leistung geschaltet werden. Für eine realistische Raumbeleuchtung ist allerdings eine Vielzahl von Leuchtdioden erforderlich, um die nötige Lichtstärke zu erreichen. Bei großen Räumen ist daher davon auszugehen, dass mehrere 100 W an elektrischer Leistung notwendig sind. Diese müssen zur Datenübertragung mit hohen Frequenzen von einigen MHz geschaltet werden. Dies ist aber nur mit vergleichsweise hohem technologischem und finanziellem Aufwand durchzuführen.

Aus der EP 1 564 914 A1 ist eine Vorrichtung zur Kommunikation mit Hilfe von Beleuchtungslicht bekannt, die eine LED-Lichtquelle zur Beleuchtung, eine Versorgungsleitung, die elektrischen Strom zu der LED-Lichtquelle liefert, einen Datenmodulator, der eine Mehrzahl von Daten moduliert und bündelt, das resultierende Signal einer Signalform des elektrischen Stroms überlagert und dann die resultierende überlagerte Signalform zu der Versorgungsleitung überträgt, und eine Filtereinheit, welche ein Datum oder mehrere Daten der Mehrzahl von modulierten Daten auf der Versorgungsleitung selektiv abtrennt, so dass eine Lichtintensität oder ein Blinken der LED-Lichtquelle gesteuert wird. Dabei werden die Daten durch Veränderungen der Lichtintensität oder ein Blinken der LED-Lichtquelle übertragen.

Aus der Druckschrift US 2004/0004627 A1 sind Daten-Kodier- und Daten-Dekodier-Verfahren für die optische Datenübertragung bekannt, bei dem auf der Sendeseite der optischen Datenübertragung der Raum eines zwei-dimensionalen Blinkmusters in eine Vielzahl von Auflösung-Sub-Räumen aufgeteilt wird, auf die die bei der Datenübertragung zu übertragenden Daten während des Kodier-Verfahrens durch ein "mapping" abgebildet werden. Auf der Empfangsseite, wo aufgrund der großen Entfernung zwischen Sende- und Empfangsseite nur reduziert und unzureichende aufgelöst werden kann, wird das in die mehreren Auflösung-Sub-Räumen aufgeteilte, zwei-dimensionale Blinkmuster entsprechend der vorhandenen Auflösung gelesen. Auf diese Art kann auf der Empfangsseite eine Entscheidung darüber getroffen werden, ob von der Sendeseite noch weitere detailliertere Informationen für die optische Datenübertragung von Nöten sind.

Die der Erfindung zugrundeliegende Aufgabe ist es, ein Verfahren zur Aussendung von Daten mittels einer Mehrzahl von Leuchtdioden anzugeben, das mit einer einfachen elektronischer Beschaltung durchführbar ist. Weiterhin ist es Aufgabe der Erfindung, eine Anordnung mit einer Mehrzahl von Leuchtdioden anzugeben, die zur Aussendung von Daten mit einer vereinfachten elektronischen Beschaltung geeignet ist.

Diese Aufgabe wird hinsichtlich des Verfahrens durch ein Verfahren mit den Merkmalen von Anspruch 1 gelöst. Weiterhin wird die Aufgabe hinsichtlich der Anordnung durch eine Anordnung mit den Merkmalen von Anspruch 6 gelöst. Vorteilhafte Ausgestaltungen des Verfahrens und der Anordnung ergeben sich aus den abhängigen Ansprüchen.

Bei dem Verfahren zur Aussendung von N-Bit Daten mittels einer Mehrzahl von Leuchtdioden werden die Daten mittels einer Modulation der Intensität der Leuchtdioden ausgesandt. Weiterhin werden die Leuchtdioden bezüglich der Modulation zu wenigstens 2^{N}-1 Gruppen zusammengefasst. Die Leuchtdioden einer jeweiligen Gruppe werden gemeinsam und gleichartig moduliert und die Modulationen der Gruppen werden derartig aufeinander abgestimmt, dass die Informationen im Zusammenhang der Modulationen codiert sind. Zur Codierung der Daten wird eine anhand der Informationen festgelegte Anzahl Gruppen jeweils an- und ausgeschaltet. So kann beispielsweise für eine Übertragung von einem N Bit-Wert, also einer ganzen Zahl von "0" - "2^{N}-1" ((2 hoch N) minus 1), eine Einteilung der Leuchtdioden in 2^{N}-1 Gruppen erfolgen. Dazu müssen zweckmäßigerweise wenigstens 2^{N}-1 Leuchtdioden vorhanden sein. Dabei werden die Daten der 2^{N}-1 Gruppen dunkelgetastet oder hellgetastet, wobei die Leuchtdioden zur Raumbeleuchtung mit einer konstanten Intensität betrieben und zur Aussendung der Daten verwendet werden und die Leuchtdioden derart zu Gruppen zusammengefasst werden, dass die Leuchtdioden einer jeweiligen Gruppe gleichmäßig über die gesamte Ausdehnung einer Lampe, die sie bilden, verteilt sowie die Leuchtdioden der Gruppen gleichmäßig über Blöcke und über die Decke des Raums verteilt sind.

Für eine "0" wird dann keine der Gruppen dunkelgetastet, für eine "1" eine der Gruppen usw. Für eine "2^{N}-1" werden alle Gruppen, d.h. auch alle Leuchtdioden, dunkelgetastet.

Die Modulation ist bevorzugt nicht für den Menschen wahrnehmbar, da eine sichtbare Modulation im Allgemeinen störend wirkt. Alternativ ist es auch möglich, die Modulation wenigstens teilweise wahrnehmbar zu gestalten. Damit kann beispielsweise einem Nutzer direkt gezeigt werden, dass die Leuchtdioden Daten aussenden. Bei den Daten handelt es sich bevorzugt um digitale Daten.

Durch das erfindungsgemäße Vorgehen wird ermöglicht, eine Multilevel-Datenaussendung, d.h. mehrstufige Datenaussendung, durchzuführen, bei der durch den Zusammenhang der Modulationen der Gruppen mehrere Bits gleichzeitig übertragbar sind. Im Vergleich zu einer gleichartigen Modulation aller Leuchtdioden, d.h. ohne die Einteilung in Gruppen, wird dadurch erreicht, bei einer gleichbleibenden Datenrate die Rate der elektrischen Schaltvorgänge zu verringern. Die elektronische Beschaltung wird dadurch vereinfacht.

Eine Übertragung der N Bit mit nur N Gruppen ist denkbar., jedoch nicht Inhalt der Ansprüche.

Die Dunkeltastung von einer gewissen Anzahl A von Gruppen mit 1 < A < N kann dann zur Übertragung verschiedener Werte verwendet werden, deren binäre Repräsentation die Dunkeltastung von A Gruppen erfordert. Dabei ist allerdings zu beachten, dass diese Werte dann nicht anhand der resultierenden Helligkeit allein zu unterscheiden sind. Die Auflösung der Werte erfordert dann einen Zusatzaufwand wie beispielsweise eine positionssensitive Detektion.

Das Verfahren zur Aussendung von Daten lässt sich vorteilhaft in einem Verfahren zur gleichzeitigen Raumbeleuchtung einsetzen, bei dem die Leuchtdioden zur Raumbeleuchtung mit einer im Wesentlichen konstanten Intensität betrieben werden. Die konstante Intensität wird zweckmäßig lediglich durch die Modulation beeinflusst, was bevorzugt für den Menschen nicht wahrnehmbar ist.

Die Leuchtdioden bilden bei der Verwendung als Raumbeleuchtung zweckmäßig einen Leuchtkörper, d.h. eine Lampe. Die Gestaltungsfreiheit ist bei Leuchtdioden allerdings gegenüber herkömmlichen Leuchtmitteln deutlich erhöht, wodurch sich der Leuchtkörper durchaus über einen ganzen Raum erstrecken kann, beispielsweise mit einzelnen Inseln von Leuchtdioden, die aber gemeinsam betrieben werden. In einer vorteilhaften Ausgestaltung und Weiterbildung der Erfindung wird die Zusammenfassung zu Gruppen derartig durchgeführt, dass die Leuchtdioden einer jeweiligen Gruppe möglichst gleichmäßig verteilt sind über die gesamte Ausdehnung des Leuchtkörpers, den die Leuchtdioden bilden. Hierdurch wird vermieden, dass durch eine ungleichartige Modulation verschiedener der Gruppen eine ungleichmäßige Beleuchtung entsteht. Eine solche ungleichartige Modulation kann in dem oben gegebenen Beispiel mit Dunkeltastung entstehen, wenn eine der Gruppen bei jedem Wert größer als "0" dunkelgetastet wird, während eine andere beispielsweise nur bei dem Wert "2^{N}-1" dunkelgetastet wird. Die letzte Gruppe wird dann viel seltener dunkelgetastet, was insgesamt zu einer im zeitlichen Mittel höheren Intensität führt. Die gleichmäßige Verteilung über den Leuchtkörper aber verhindert, dass diese ungleiche Intensität erkennbar ist.

Die beschriebenen Verfahren lassen sich vorteilhaft zur Übertragung von Daten verwenden, wobei die ausgesandten Informationen von einer Empfangseinrichtung, insbesondere einem PC, Mobiltelefon oder PDA, empfangen werden. Die Empfangseinrichtung kann hierzu eine geeignete Empfangsvorrichtung, beispielsweise eine Photodiode mit entsprechender elektronischer Beschaltung, wie sie auch zum Empfang infraroter Signale bekannt ist, verwenden.

Die Anordnung zur Aussendung von Daten weist eine Mehrzahl von Leuchtdioden auf. Diese sind derart ausgestaltet, dass die Informationen mittels einer Modulation der Intensität der Leuchtdioden übertragen werden. Dabei sind die Leuchtdioden bzgl. der Modulation zu wenigstens 2^{N}-1 Gruppen zusammengefasst, wobei die Leuchtdioden einer jeweiligen Gruppe gemeinsam und gleichartig modulierbar sind. Die Modulationen der Gruppen sind derartig aufeinander abstimmbar, dass die Informationen im Zusammenhang der Modulationen codiert sind. Zur Codierung der Daten wird eine anhand der Informationen festgelegte Anzahl Gruppen jeweils an- und ausgeschaltet. So kann beispielsweise für eine Übertragung von einem N Bit-Wert, also einer ganzen Zahl von "0" - "2^{N}-1" ((2 hoch N) minus 1), eine Einteilung der Leuchtdioden in 2^{N}-1 Gruppen erfolgen. Dazu müssen zweckmäßigerweise wenigstens 2^{N}-1 Leuchtdioden vorhanden sein. Dabei werden die Daten der 2^{N}-1 Gruppen dunkelgetastet oder hellgetastet, wobei die Leuchtdioden zur Raumbeleuchtung mit einer konstanten Intensität betrieben und zur Aussendung der Daten verwendet werden und die Leuchtdioden derart zu Gruppen zusammengefasst werden, dass die Leuchtdioden einer jeweiligen Gruppe gleichmäßig über die gesamte Ausdehnung einer Lampe, die sie bilden, verteilt sowie die Leuchtdioden der Gruppen gleichmäßig über Blöcke und über die Decke des Raums verteilt sind.

Die Modulation ist bevorzugt nicht für den Menschen wahrnehmbar.

Die Ausgestaltungen, die für das Verfahren beschrieben wurden, sind auch auf die Anordnung anwendbar.

Weitere Vorteile und Einzelheiten der Erfindung werden anhand von einem in der Zeichnung dargestellten Ausführungsbeispiel erläutert. Dabei zeigen
- Figur 1: eine aus Leuchtdioden bestehende Lampe sowie zum Empfang ausgestaltetes PDA; und
- Figur 2: eine Intensitätsmodulation mehrerer Gruppen von Leuchtdioden.

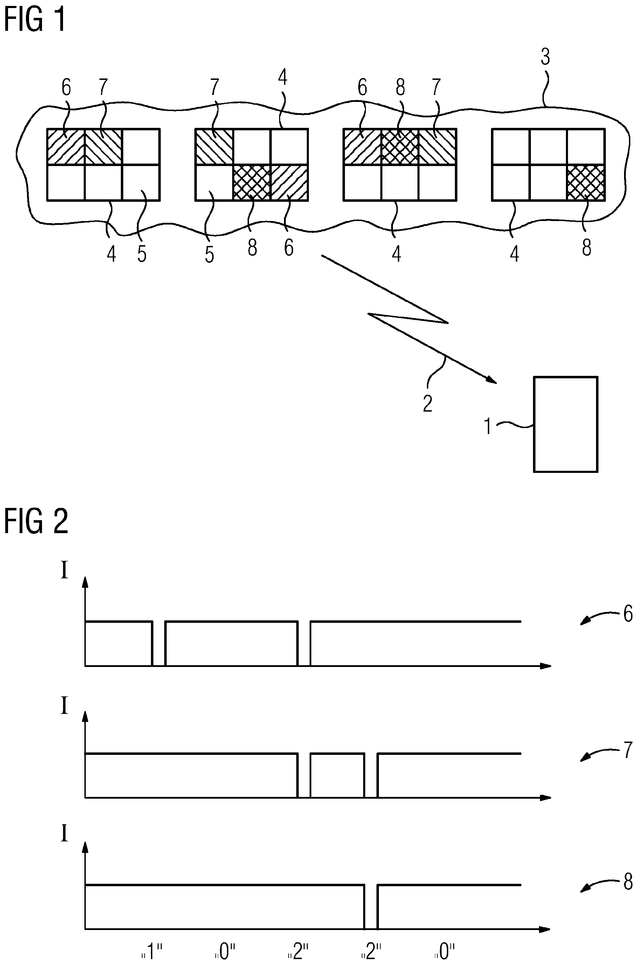

Figur 1 zeigt schematisch als Ausführungsbeispiel eine zur Raumbeleuchtung gedachte Lampe 3 mit vier Blöcken 4 von jeweils sechs Leuchtdioden 5. Die Leuchtdioden 5 eines Blocks 4 sind dabei in einem Rechteck zu 2 x 3 Leuchtdioden 5 angeordnet. Die Blöcke 4 sind in einem zu beleuchtenden Raum über die Länge der Decke des Raums verteilt, werden aber von einer gemeinsamen Elektronik betrieben.

In diesem Ausführungsbeispiel sind die Leuchtdioden 5 zu acht Gruppen 6...8 von jeweils drei Leuchtdioden 5 zusammengefasst, von denen drei Gruppen 6...8 in der Figur 1 angedeutet sind. Die Leuchtdioden 5 der Gruppen 6...8 sind soweit möglich gleichmäßig über die Blöcke 4 der Lampe 3, und damit über die Decke des Raums verteilt.

Es wird davon ausgegangen, dass die Lampe 3 zur Raumbeleuchtung eingeschaltet ist. Die Leuchtdioden 5 der Lampe 3 leuchten daher mit einer geeigneten Intensität, die im Wesentlichen konstant ist. Zur Aussendung von Daten 2 wird eine Modulation der Intensität der Leuchtdioden 5 vorgenommen. Dabei werden die jeweils vier Leuchtdioden 5 der Gruppen 6...8 gemeinsam moduliert.

Eine beispielhafte Modulationsform ist schematisch in Figur 2 anhand der Modulation von drei der sechs Gruppen 6...8 dargestellt. Zur Aussendung der Daten werden sie in nicht wahrnehmbarer Weise für eine kurze Zeit, beispielsweise 1ms, dunkel getastet. Nach einer Dunkeltastung wird ein Abstand von beispielhaft 19ms gelassen zur nächsten möglichen Dunkeltastung.

Mit den drei Gruppen 6...8, die in Figur 2 beispielhaft dargestellt sind, können die Symbole "0" bis "3" übertragen werden, d.h. mit jeder Dunkeltastung eine Informationsmenge von 2 Bit. Dafür werden für eine "0" keine der Gruppen 6...8 dunkelgetastet, für eine "1" eine der Gruppen 6...8, für eine "2" zwei der Gruppen 6...8 und für eine "3" alle drei Gruppen 6...8.

Es ist auch möglich, die beschriebenen Zuordnungen von der Anzahl Gruppen 6...8 zu den Symbolen zu variieren. So kann beispielsweise erreicht werden, dass möglichst selten überhaupt eine Dunkeltastung nötig ist, indem das häufigste der Symbole mittels der Dunkeltastung keiner Gruppe 6...8 übertragen wird. Ebenfalls möglich ist es, die Zuordnung von Symbolen und Anzahl der Gruppen 6...8 zu variieren oder die konkreten Gruppen 6...8, die dunkelgetastet werden, zufällig auszuwählen für eine gegebene Anzahl Gruppen 6...8, um eine gleichmäßige Belastung der Leuchtdioden 5 mit Schaltvorgängen zu erreichen. Eine weitere Ausgestaltung besteht darin, für jeden der Werte wenigstens eine Gruppe 6...8 dunkel zu tasten, um eine bessere Synchronisation des Empfängers zu ermöglichen, wodurch die Anzahl an benötigten Gruppen erhöht wird. Je nach zu übertragendem Symbol wird die entsprechende Anzahl von Gruppen dunkel getastet. Beispielsweise wird gemäß Figur 2 zur Übertragung einer "1" die erste Gruppe 6 dunkel getastet, zur Übertragung einer "0" keine der drei Gruppen 6...8. Zur Übertragung einer nachfolgenden "2" werden die ersten beiden Gruppen 6, 7 dunkel getastet. Um die Dunkeltastungen gleichmäßiger auf die Gruppen 6...8 zu verteilen, wird für eine weitere "2" nun die zweite und dritte Gruppe 7, 8 dunkel getastet. Für die nachfolgende "0" wird wiederum keine der drei Gruppen 6...8 dunkel getastet.

Mit der in diesem Beispiel verwendeten Modulation lassen sich in 20ms also 2 Bit übertragen, d.h. es wird eine Datenrate von 100 Bit/s erreicht.

Würden alle Leuchtdioden 5 gleichartig moduliert werden, könnte pro Dunkeltastung immer nur ein Bit übertragen werden. Da gemäß dem beschriebenen Beispiel pro Dunkeltastung zwei Bit übertragen werden, kann bei gleichbleibender Datenrate die Schaltrate auf die Hälfte gesenkt werden. Dies vereinfacht den elektronischen Aufbau. Eine größere Anzahl von Gruppen 6...8 verringert dabei die nötige Schaltrate um etwa den binären Logarithmus der Anzahl der Gruppen 6...8.

Die ausgesandten Daten werden beispielhaft von einem PDA 1 empfangen. Dazu weist das PDA 1 eine Photodiode mit entsprechender Optik und elektronischer Verschaltung auf, um aus der Modulation der Raumbeleuchtung die Daten zu ermitteln.

Ist die Lampe 3 ausgeschaltet, beispielsweise wenn tagsüber weit helleres Licht durch die Fenster des Raums fällt, als die Lampe 3 erzeugen könnte, so ist die Aussendung der Daten 2 nicht ohne weiteres möglich. Eine Vorgehensweise, mit dieser Situation umzugehen, ist, die Lampe 3 im ausgeschalteten Zustand dennoch mit einer reduzierten Intensität zu betreiben, die bei Tageslicht für den Menschen nicht erkennbar ist. Die ausgesandten Daten können aber dennoch von einer Empfangseinrichtung empfangen werden. Dabei ist es sogar denkbar, die Datenrate zu erhöhen, da zum Einen die zu schaltende elektrische Leistung wegen der geringeren Intensität geringer ist und zum anderen eine Störung der Beleuchtungsfunktion durch die Modulation nicht eintreten kann, da die Lampe 3 in diesem Fall gar nicht der Beleuchtung dient.

Bei Tageslicht ist es auch möglich, dass der Empfänger durch das Tageslicht gesättigt wird, was zu einer Beeinträchtigung der Signalqualität führen kann. Eine Ausrichtung des Empfängers auf die Lampe 3 kann beispielsweise dazu verwendet werden, die Beeinträchtigung zu vermeiden.

Eine weitere Möglichkeit des Betriebs bei ausgeschalteter Lampe 3 besteht darin, das Verfahren bei angeschalteter Lampe 3 dahingehend umzukehren, dass die Dunkeltastung durch eine Helltastung ersetzt wird. Wird diese mit genügendem Abstand durchgeführt, so erscheint die Lampe 3 nahezu dunkel.

## Patentansprüche

1. Verfahren zur Aussendung von N-Bit-Daten (2) mittels einer Mehrzahl von Leuchtdioden (5), bei dem:
- die Daten mittels einer Modulation der Intensität der Leuchtdioden (5) übertragen werden;
- die Leuchtdioden (5) zu wenigstens 2^{N}-1 Gruppen (6...8) zusammengefasst werden;
- die Leuchtdioden (5) einer jeweiligen Gruppe (6...8) gemeinsam und gleichartig moduliert werden; und
- die Modulationen der Gruppen (6...8) derartig aufeinander abgestimmt werden, dass die Daten im Zusammenhang der Modulationen kodiert sind,
- wobei zur Kodierung der Daten eine anhand der Daten festlegbare Anzahl der Gruppen (6...8) dunkelgetastet oder hellgetastet wird, so dass ein N-Bit-Wert mit einer Länge von N Bits durch Einteilung der Leuchtdioden (5) in 2^{N}-1 Gruppen übertragen wird, wobei N eine natürliche Zahl größer gleich zwei ist.

2. Verfahren zur Raumbeleuchtung und Aussendung von Daten (2) mittels einer Mehrzahl von Leuchtdioden (5), bei denen die Leuchtdioden (5) zur Raumbeleuchtung mit einer im Wesentlichen konstanten Intensität betrieben werden und weiterhin zur Aussendung der Daten (2) ein Verfahren gemäß Anspruch 1 verwendet wird.

3. Verfahren gemäß Anspruch 2, bei dem die Leuchtdioden (5) derart zu Gruppen (6...8) zusammengefasst werden, dass die Leuchtdioden (5) einer jeweiligen Gruppe (6...8) möglichst gleichmäßig verteilt sind über die gesamte Ausdehnung eines Leuchtkörpers (3), insbesondere Lampe (3), den die Leuchtdioden (5) bilden.

4. Verfahren zur Übertragung von Daten mittels einer Mehrzahl von Leuchtdioden (5), bei denen die Daten mittels eines Verfahrens gemäß Anspruch 1 ausgesendet werden und von einer Empfangseinrichtung (1), insbesondere einem PC, Mobiltelefon oder PDA (1), empfangen werden.

5. Verfahren zur Raumbeleuchtung und Übertragung von Daten mittels einer Mehrzahl von Leuchtdioden (5), bei denen die Leuchtdioden (5) zur Raumbeleuchtung und Aussendung der Informationen mit einem Verfahren gemäß Anspruch 2 oder 3 betrieben werden und die Daten von einer Empfangseinrichtung (1) empfangen werden.

6. Anordnung zur Aussendung von N-Bit-Daten (2) mit einer Mehrzahl von Leuchtdioden (5), derart ausgestaltet, dass die Daten mittels einer Modulation, der Intensität der Leuchtdioden (5) übertragen werden, wobei
- die Leuchtdioden (5) zu wenigstens 2^{N}-1 Gruppen (6...8) zusammengefasst sind;
- die Leuchtdioden (5) einer jeweiligen Gruppe (6...8) gemeinsam und gleichartig moduliert werden; und
- die Modulationen der Gruppen (6...8) derartig aufeinander abgestimmt sind, dass die Daten im Zusammenhang der Modulation kodiert sind,
- wobei zur Kodierung der Daten eine anhand der Daten festlegbare Anzahl der Gruppen (6...8) dunkelgetastet oder hellgetastet wird, so dass ein N-Bit-Wert mit einer Länge von N Bits durch Einteilung der Leuchtdioden (5) in 2^{N}-1 Gruppen übertragen wird, wobei N eine natürliche Zahl größer gleich zwei ist.

7. Anordnung zur Raumbeleuchtung und Aussendung von Daten (2) mit einer Mehrzahl von Leuchtdioden (5) gemäß Anspruch 6, bei der die Leuchtdioden (5) in einer oder mehreren Lampen (3) angeordnet sind, derart ausgestaltet, dass die Leuchtdioden (5) zur Raumbeleuchtung mit einer im Wesentlichen konstanten Intensität betrieben werden.

8. Anordnung gemäß Anspruch 7, bei der die Leuchtdioden (5) derart zu Gruppen (6...8) zusammengefasst sind, dass die Leuchtdioden (5) einer jeweiligen Gruppe (6...8) möglichst gleichmäßig verteilt sind über die gesamte Ausdehnung der Lampe (3).

9. Anordnung zur Übertragung von Daten mit:
- einer Mehrzahl von Leuchtdioden (5) gemäß Anspruch 6; und
- einer Empfangseinrichtung (1), insbesondere einem PC, Mobiltelefon oder PDA (1);
derart ausgestaltet, dass die mittels der Leuchtdioden (5) ausgesandten Daten von der Empfangseinrichtung (1) empfangbar sind.

10. Anordnung zur Raumbeleuchtung und Übertragung von Daten mit einer Anordnung zur Übertragung von Daten gemäß Anspruch 9, die weiterhin zur Raumbeleuchtung gemäß Anspruch 7 oder 8 ausgestaltet ist.

## Claims

1. Method for transmitting N bit data (2) by means of a plurality of light emitting diodes (5), wherein:
- the data is transmitted by means of modulation of the intensity of the light emitting diodes (5);
- the light emitting diodes (5) are grouped into at least 2^{N}-1 groups (6...8);
- the light emitting diodes (5) of each group (6...8) are modulated together and similarly; and
- the modulations of the groups (6...8) are matched to one another such that the data associated with the modulations is encoded,
- wherein for encoding the data, a number of groups (6...8) which can be stipulated on the basis of the data is modulated dark or modulated light, so that an N bit value with a length of N bits is transferred by dividing the light emitting diodes (5) into 2^{N}-1 groups, wherein N is a natural number greater than or equal to two.

2. Method for room illumination and transmitting data (2) by means of a plurality of light emitting diodes (5), wherein the light emitting diodes (5) are operated at a substantially constant intensity for room illumination and furthermore, for transmitting the data (2), a method according to claim 1 is used.

3. Method according to claim 2, wherein the light emitting diodes (5) are grouped together into groups (6...8) such that the light emitting diodes (5) of each group (6...8) are as evenly distributed as possible over the total extent of an illumination body (3), particularly lamp (3), formed by the light emitting diodes (5).

4. Method for transmitting data by means of a plurality of light emitting diodes (5), wherein the data is transmitted by means of a method according to claim 1 and are received by a receiving apparatus (1), particularly a PC, mobile telephone or PDA (1).

5. Method for room illumination and transmitting data by means of a plurality of light emitting diodes (5), wherein the light emitting diodes (5) are operated for room illumination and transmitting the information using a method according to claim 2 or 3 and the data is received by a receiving apparatus (1).

6. Arrangement for transmitting N bit data (2) comprising a plurality of light emitting diodes (5), configured such that the data is transmitted by means of modulation of the intensity of the light emitting diodes (5), wherein
- the light emitting diodes (5) are grouped together into at least 2^{N}-1 groups (6...8);
- the light emitting diodes (5) of each group (6...8) are modulated together and similarly; and
- the modulations of the groups (6...8) are matched to one another such that the data associated with the modulations is encoded,
- wherein for encoding the data, a number of groups (6...8) which can be stipulated on the basis of the data is modulated dark or modulated light, so that an N bit value with a length of N bits is transferred by dividing the light emitting diodes (5) into 2^{N}-1 groups, wherein N is a natural number greater than or equal to two.

7. Arrangement for room illumination and transmitting data (2) comprising a plurality of light emitting diodes (5) according to claim 6, wherein the light emitting diodes (5) are arranged in one or more lamps (3), configured such that the light emitting diodes (5) are operated for room illumination at a substantially constant intensity.

8. Arrangement according to claim 7, wherein the light emitting diodes (5) are grouped into groups (6...8) such that the light emitting diodes (5) of each group (6...8) are as evenly distributed as possible over the total extent of the lamp (3).

9. Arrangement for transmitting data comprising:
- a plurality of light emitting diodes (5) according to claim 6; and
- a receiving apparatus (1), particularly a PC, mobile telephone or PDA (1);
configured such that the data transmitted by means of the light emitting diodes (5) can be received by the receiving apparatus (1).

10. Arrangement for room illumination and transmitting data, comprising an arrangement for transmitting data according to claim 9, which is also configured for room illumination according to claim 7 or 8.

## Revendications

1. Procédé d'émission de données n-binaires (2) au moyen d'une pluralité de diodes électroluminescentes (5), dans lequel :
- les données sont transmises au moyen d'une modulation de l'intensité des diodes électroluminescentes (5) ;
- les diodes électroluminescentes (5) sont regroupées en au moins 2^{N}-1 groupes (6 ... 8) ;
- les diodes électroluminescentes (5) d'un groupe respectif (6 ... 8) sont modulées conjointement et pareillement ; et
- les modulations des groupes (6 ... 8) sont adaptées entre elles de telle sorte que les données sont codées en rapport avec les modulations,
pour le codage des données étant rendu clair ou sombre un nombre de groupes (6 ... 8) déterminable à l'aide des données, de sorte qu'est transmise une valeur n-binaire avec une longueur de N bits par répartition des diodes électroluminescentes (5) en 2^{N}-1 groupes, N étant un nombre naturel supérieur ou égal à deux.

2. Procédé d'éclairage de pièce et d'émission de données (2) au moyen d'une pluralité de diodes électroluminescentes (5) dans lequel les diodes électroluminescentes (5) pour l'éclairage de pièce fonctionnent avec une intensité sensiblement constante et, en outre, un procédé selon la revendication 1 est utilisé pour l'émission des données (2).

3. Procédé selon la revendication 2, dans lequel les diodes électroluminescentes (5) sont regroupées en groupes (6 ... 8) de telle sorte que les diodes électroluminescentes (5) d'un groupe respectif (6 ... 8) sont réparties aussi uniformément que possible sur l'ensemble de l'étendue d'un corps lumineux (3), en particulier d'une lampe (3), formé par les diodes électroluminescentes (5).

4. Procédé de transmission de données au moyen d'une pluralité de diodes électroluminescentes (5), dans lequel les données sont émises au moyen d'un procédé selon la revendication 1 et sont reçues par un dispositif de réception (1), et plus particulièrement par un PC, un téléphone mobile ou un PDA (1).

5. Procédé d'éclairage de pièce et de transmission de données au moyen d'une pluralité de diodes électroluminescentes (5), dans lequel les diodes électroluminescentes (5) pour l'éclairage de pièce et l'émission des informations fonctionnent avec un procédé selon la revendication 2 ou 3 et les données sont reçues par un dispositif de réception (1).

6. Ensemble pour émettre des données n-binaires (2) avec une pluralité de diodes électroluminescentes (5), conçu de telle sorte que les données sont transmises au moyen d'une modulation de l'intensité des diodes électroluminescentes (5),
- les diodes électroluminescentes (5) étant regroupées en au moins 2^{N}-1 groupes (6 ... 8) ;
- les diodes électroluminescentes (5) d'un groupe respectif (6 ... 8) étant modulées conjointement et pareillement ; et
- les modulations des groupes (6 ... 8) étant adaptées entre elles de telle sorte que les données sont codées en rapport avec la modulation,
pour le codage des données étant rendu clair ou sombre un nombre de groupes (6 ... 8) déterminable à l'aide des données, de sorte qu'est transmise une valeur n-binaire avec une longueur de N bits par répartition des diodes électroluminescentes (5) en 2^{N}-1 groupes, N étant un nombre naturel supérieur ou égal à deux.

7. Ensemble d'éclairage de pièce et d'émission de données (2) avec une pluralité de diodes électroluminescentes (5) selon la revendication 6, dans lequel les diodes électroluminescentes (5) sont agencées dans une ou plusieurs lampes (3), conçu de telle sorte que les diodes électroluminescentes (5) pour l'éclairage de pièce fonctionnent avec une intensité sensiblement constante.

8. Ensemble selon la revendication 7, dans lequel les diodes électroluminescentes (5) sont regroupées en groupes (6 ... 8) de telle sorte que les diodes électroluminescentes (5) d'un groupe respectif (6 ... 8) sont réparties aussi uniformément que possible sur l'ensemble de l'étendue de la lampe (3).

9. Ensemble de transmission de données, comportant :
- une pluralité de diodes électroluminescentes (5) selon la revendication 6 ; et
- un dispositif de réception (1), et plus particulièrement un PC, un téléphone mobile ou un PDA (1),
conçu de telle sorte que les données émises au moyen des diodes électroluminescentes (5) peuvent être reçues par le dispositif de réception (1).

10. Ensemble d'éclairage de pièce et de transmission de données avec un ensemble de transmission de données selon la revendication 9, conçu en outre pour l'éclairage de pièce selon la revendication 7 ou 8.
